# EUROPEAN PATENT APPLICATION

(11) **EP 3 913 783 A1**
(43) Date of publication of application: **24.11.2021**
(21) Application number: 21173773.9
(22) Date of filing: 13.05.2021
(51) Int. Cl.: H02M 3/155, H02M 7/537

(54) **UNIVERSAL DC-DC/AC CONVERTERS**

(30) Priority: 20.05.2020 GB 202007547
(71) Applicant: Tallinn University of Technology, 19086 Tallinn (EE)
(72) Inventor: HUSEV, Oleksandr, 19086 Tallinn (EE); VINNIKOV, Dmitri, 19086 Tallinn (EE); MATIUSHKIN, Oleksandr, 19086 Tallinn (EE); CLEMENTE, Carlos, 19086 Tallinn (EE)
(74) Representative: Sarap, Margus

(57) **Abstract**

The present invention proposes a power electronic converter structure, which can provide power transfer from input DC voltage source to the output AC or DC grid or load with minimal redundancy. Apparatus and methods provide reconfiguration of the semiconductor stages and control in order to achieve maximum efficiency and safe connection/disconnection. The universal single-phase DC-DC/AC converter can provide DC or AC output voltage in the off-grid mode using the same two output terminals. In the grid-connected mode, it can be connected to the AC or DC grid using the same terminal as well. Universality is achieved by means of any internal DC-DC converter, unfolding circuit, suppression capacitor and solid-state relay. Similar approach is used for universal three-phase converters. Well-known phase-integrated approach for AC voltage generation is supplemented by additional relay, suppression capacitors and solid-state relays. It allows to realize DC output voltage with parallel operation of internal DC-DC converters, which in turns provides maximum efficiency.

## Description

### Technical field

This invention belongs to the field of power electronics and pertains to apparatus and methods of derivation of universal DC-DC/AC converters that can be connected to AC or DC grid or load using the same output terminals with minimal redundancy.

### Background art

Obvious trend of nowadays-electric grid is a growing interest to DC (direct current) grid. It is a well-known fact that AC (alternating current) voltage level can be easily stepped up or down by means of a transformer. The effective electrical energy distributed system can be constructed. However, recent works show that even a high-voltage DC-current distribution system is more effective than a high-voltage AC system. Due to the latest research efforts in power electronics, the high-voltage DC-current system may replace an AC system in the coming decades. The DC low-voltage distributed system may become a reality even sooner. Due to the simplicity of storage systems or renewable energy integration, reduction of power electronics stages in many devices that are connected to the conventional AC grid, this solution attracts discussion and research efforts towards implementation. At the same time, it is evident that transient from AC to DC grid cannot be done immediately. In the nearest decade, we will observe a merge of DC and AC systems. As a result, new generation of power electronics converters has to be adapted to the DC and AC grid utilities.

There is a trend to consider future power electronics converter solutions simultaneously suitable for dc and ac application:
S. Danyali, S.H. Hosseini, G.B. Gharehpetian, 'New Extendable Single-Stage Multi-input DC-DC/AC Boost Converter', IEEE Trans. on Power Electron., vol. 29, no. 2, pp. 775 - 788, 2013
For example, so called hybrid converters have dc and ac terminals and correspondent internal power electronics. In the most cases it relates to the hybrid solar converters where additional dc terminals are intended for battery storage connection. The internal structure of these converters has correspondent additional components.

There are few examples when converter has dc-link terminals for dc grid connection along with ac grid. In a very general case, these converters are called multiport converters:
Wei Jiang, B. Fahimi, 'Multiport Power Electronic Interface-Concept, Modeling, and Design', IEEE Trans. on Power Electron., vol. 27, no. 6, pp. 1890 - 1900, 2011.

The idea of universal multiphase converters is shown in Mahshid Amirabadi, "A new class of high-power density universal Power Converters," in proc. of 2015 IEEE Energy Conversion Congress and Exposition (ECCE), 2015, pp. 1-6.

Authors of the present invention have been analysed many research literature and patents.

Most of the patents with similar key words (WO2012149387A1, DE202019101527U1, CN109660115) belong to the concept of multiport converters, with modified details.

The closest idea of three-phase converter is disclosed in document "A New Bidirectional Three-Phase Phase-Modular Boost-Buck AC/DC Converter", David Menzi, Dominik Bortis and Johann W. Kolar, 2018, (https://ieeexplore.ieee.org/stamp/stamp.jsp?tp=&arnumber=8590670), where parallel connection of three DC-DC converters realizes AC-DC converter. Due to the three-wire configuration of three-phase AC system, the DC-component is subtracted and pure sinusoidal line voltage is derived.

At the same time, the described solution does not have any apparatus, which may provide operation of this converter in DC mode (with two or three wires configuration).

There are several patents that are protecting similar solutions.

In US 20080/0164764, Modern Sense Limited, 10.07.2008 is described a universal power adaptor for converting an input voltage and two or more output voltages. The universal power adaptor is a DC converter which input is adapted for connection with a DC voltage source. The adaptor comprises a voltage converter circuit for converting between the input voltage and output voltages, the voltage converter includes a voltage divider circuit having floating legs to connect one of pre-set voltages to the output.

In document WO 01/13519 A1, Bartronics Inc., 22.02.2001 is described a method for symmetrical division of the conduction losses and of switching losses of a valve on the consisting direct parallel electronic switches.

In document EP 1 863 176 A1, Honeywell Inc., 05.12.2007 is described an apparatus for power supply input connection, where said apparatus comprising: a first switch module connected to a first power supply input; a first controller module connected to said first power supply input and to a secondary power connection, wherein said first controller module puts said first switch module in a first operating state when a parameter relating to said first power supply input is larger than a parameter relating to said secondary power connection, and puts said first switch module in a second operating state when said parameter relating to said first power supply input is smaller than said parameter relating to said secondary power connection; and a first driver module connected to said first controller module and to said first switch module, wherein said first driver module modifies a parameter relating to a drive characteristic of said first switch module.

Document US 2005/0068792 A1, Masayuki Yasumura, 31.03.2005 describes a switching power supply circuit, including a rectification smoothing section for rectifying and smoothing an AC input voltage to produce a DC input voltage, a switching section including a plurality of switching elements for switching the DC input voltage to intermittently output the DC input voltage, a drive section, an insulating converter transformer including a primary winding provided on a primary side and a secondary winding provided on a secondary side, a primary side resonance capacitor connected to a predetermined location of the primary side and having a capacitance for cooperating with a leakage inductance component of the primary winding of the insulating converter transformer, a secondary side smoothing capacitor, a synchronous rectification circuit of a winding voltage detection system for rectifying an AC voltage induced in the secondary winding of the insulating converter transformer and charging the secondary side smoothing capacitor with resulting rectification current to obtain a secondary side DC output capacitor, and a constant voltage control section, the synchronous rectification circuit including an inductor element having a cylindrical bead core and inserted in the rectification current path, the inductor element having a DC superposition characteristic set.

Document US 2002/0114172 A1, Rockwell Scientific Company, LLC, 22.08.2002 describes a converter circuit comprising a transformer core, a primary winding, a secondary winding, a main rectification circuit, an auxiliary rectification circuit. The primary winding and the secondary winding are wound around the transformer core. The main rectification circuit and the auxiliary rectification circuit are both connected to the secondary winding and produce output voltages having different magnitudes. The auxiliary rectification circuit further comprises a second output capacitor. An output voltage of the auxiliary rectification circuit is produced across the second output capacitor. The output voltage of the auxiliary rectification circuit has a magnitude which is different than a magnitude of the output voltage of the main rectification circuit.

Document EP2025051 B1, describes a power conversation circuit from Buck-Boost family used for DC-DC, DC-AC, and AC-AC power conversations. The power converter uses capacitance, either parasitic alone or with added discrete devices, in parallel with the Buck-Boost inductor to achieve low turn-off switching stresses on the semiconductor switches, allowing relatively slow switches to be used. The power conversation circuit comprises from first stage (parallel combination of an inductor and a capacitor, and a bridge switch; second stage comprising a bridge switch array formed from bidirectional switching devices.

The patent EP2025051B1 (WO 2008/008143) UNIVERSAL POWER CONVERTER and the patent US10848071 B2 HIGHLY RELIABLE AND COMPACT UNIVERSAL POWER CONVERTER have similar keywords and initially covers several aspects of universality. It relates to electric power conversion, and more particularly to buck-boost converter circuits, methods and systems which can convert DC to DC, DC to AC, and AC-AC, and are suitable for applications including line power conditioners, battery chargers, hybrid vehicle power systems, solar power systems, motor drives, and utility power conversion.

In EP2025051B1 It is claimed that the same converter (Figure 22) can act as DC-DC, DC-AC, AC-DC, and AC-AC converter. At the same time, it relates to the only single-phase system and it does not have any apparatus and discussion how to provide safe connection to the DC grid and AC grid or load. Also, the redundancy issue is not addressed which makes it not feasible for industrial application. The patent US10848071B2 covers any phase number applications but has evident redundancy and does not have any apparatus in order to provide safe DC grid connection/disconnection.

Finally, the most recent patent US2020/0122586 devoted to the "Vehicle power system with configurable output converter" and discloses power converter including one or more phase leg lines and a negative rail line. The system includes a controller that operates the power converter to flow current through some of the phase leg lines and the negative rail line to output DC power, and operates the power converter to flow current through the some of the phase leg lines and not the negative rail line to output AC power. It can be seen, that described on-board charger contains separate converters for single-phase AC, three-phase AC and additional terminals to reconfigure the single-phase AC for DC operation.

This invention proposes concept of realization of universal converters with DC input voltage source and can be connected to DC or AC grid with minimal redundancy in terms of size, terminals, losses and cost. It contains additional apparatus which provide safe connection to both types of grid (DC gird or any AC grid) and additional apparatus which provide reconfiguration for the most efficient performance. Similar to the conventional solutions, these types of converters can provide power feeding from the input DC source to the DC or AC load in islanding mode. Proposed structures intended for feasibility enhancement and will allow to substitute converters that can be connected only to DC (load) or only to AC grid (load).

The possible market is enormous. DC-DC and DC-AC solar converters can be replaced by single DC-DC/AC converter. The same belongs to the battery storage interface converters and different electric drives converters. In addition, this idea can be implemented for uninterruptible power supply systems. In present invention the term "Universal" means that the same converter can be used for different applications, but only for one of them at the same time. For example the converter can be used with devices working in DC or with device working in AC, there is no needed two different converters.

### Disclosure of the invention

This invention consists in development of the apparatus and methods derivation of universal DC-DC/AC converters that can provide power transfer from input DC voltage source to the output AC or DC grid or load with minimal redundancy.

In particular, the present invention proposes a power electronic converter structure, which can provide DC or AC output with minimal redundancy. Apparatus and methods provide reconfiguration of the semiconductor stages and control in order to achieve maximum efficiency and safe connection/disconnection.

An universal single-phase DC-DC/AC converter, capable to work with single-phase AC or DC output voltage/current by means of changing of control strategy comprising an input DC voltage source connected to a universal single-phase DC-DC/AC converter comprising a DC-DC converter and an additional switchers, an inductor, a capacitor, internal solid-state relay and a suppression capacitor and two output terminals, whereas a single-phase AC relay/circuit breaker and DC relay/circuit breaker are connected to output terminals A single-phase AC relay/circuit breaker and DC relay/circuit breaker are internal components of the universal single-phase DC-DC/AC converter with DC and AC output terminals. In this case, both the DC and AC terminals are available for customers and can be connected to correspondent DC or AC grid or load. At the same time, the universal single-phase DC-DC/AC converter or universal single-phase DC-DC/AC converter with DC and AC output terminals can provide power only to the AC output or DC output simultaneously.

Due to the presence of internal *SSR,* the universal single-phase DC-DC/AC converter can be directly connected to the single-phase AC grid or load and two-wire DC grid or load through the output terminals.

The operation principle of the universal single-phase DC-DC/AC converter does not depend on the presence of single-phase AC relay/circuit breaker and DC relay/circuit breaker. These relays/circuit breakers can be mechanical or solid-state.

If the converter is connected to the single-phase AC grid or load, any conventional DC-DC converter provides sinusoidal modulation with constant component, while switchers *S₁*-*S₄* are working in unfolding mode with low frequency modulation which in turns provides pure sinusoidal output voltage shape. This operation principle is well-known and description can be found in the following publication:
O. Husev, O. Matiushkin, C. Roncero, F. Blaabjerg, D. Vinnikov, "Novel Family of Single-Stage Buck-Boost Inverters Based on Unfolding Circuit", IEEE Trans. Power Electron., vol. 34, no. 8, pp. 7662-7676, 2019.

The control system of DC-DC converter in this case works in the same way with the only difference that consists in the constant reference voltage level.

The measurement system estimates the type of the output voltage and change control algorithm.

The switching between output AC and DC operation is achieving by changing of control strategy of DC-DC converter along with state of external switchers.

Internal suppression capacitor and solid-state relay are required in order to provide smooth connection/disconnection to the DC grid or load. At the same time, solid-state relay acts as conventional circuit breaker for AC mode.

In case of three-phase AC operation, the three-phase AC grid or load without neutral wire is connected to the terminals through the external three-phase three-wire AC relay/circuit breaker. Each of internal DC-DC converters provide the sinusoidal output voltage with constant component by means of conventional control approach while relay is open. In fact, each of DC-DC converters provides only positive output voltage, but due to the three-wire connection of the three-phase system, it provides three-phase linear voltage without constant component by means of subtraction of DC component. This concept of AC output voltage derivation is disclosed in the document "A New Bidirectional Three-Phase Phase-ModularBoost-Buck AC/DC Converter", David Menzi, Dominik Bortis and Johann W. Kolar, 2018, (https://ieeexplore.ieee.org/stamp/stamp.jsp?tp=&arnumber=8590670).

In this case of DC operation, the terminals are connected in one point by means of closed relay. It provides their parallel connection. Each of the DC-DC converters provides DC output voltage. The power flow from input DC source is shared between connected in parallel DC-DC converters. The two-wire DC grid or load is connected to the output terminals of the universal three-phase DC-DC/AC converter without neutral wire. The measurement system estimates the type of the output voltage and change control configuration of relay and control algorithm. Both control algorithms for DC and AC output are conventional, but the invention consists in the circuit reconfiguration and additional components. Similar to single-phase solution, suppression capacitors and solid-state relay are required in order to provide smooth connection/disconnection to the DC grid or load. At the same time, solid-state relay may act as conventional circuit breaker for AC mode.

Similar to single-phase solution, the universal three-phase DC-DC/AC without neutral point may have external relays/circuit breakers or internal relays/circuit breakers that commutate DC or AC gird/load. In this case, both the DC and AC terminals are available for customers and can be connected to correspondent DC or AC grid or load. At the same time, the universal three-phase DC-DC/AC converter without neutral wire or universal three-phase DC-DC/AC converter without neutral wire with DC and AC output terminals can provide power only to the AC output or DC output simultaneously.

At the same time, the three-phase three-wire AC relay/circuit breaker and DC relay/circuit breaker are required for mechanical disconnection converter from the grid or load and are not strictly required. Due to the presence of internal *SSR,* the universal three-phase DC-DC/AC converter without neutral wire can be directly connected to the three-phase AC grid or load through the output terminals or two-wire DC grid or load through the output terminals.

Alternatively the present invention proposes a three-phase converter, which can provide DC output or four-wire three-phase output with neutral point. It consists by three different independent DC-DC converters with middle point with common input and split outputs, mechanical/solid-state relay, suppression capacitors and two solid-state relays and five output terminals.

The idea is similar to the previous solution but due to the DC-DC converters with middle point, the neutral point in three-phase system is realized. It allows to realize three-phase four-wire AC output configuration. Each of internal DC-DC converters with middle point provides the sinusoidal output voltage with constant component while relay is open.

Similar to above described, the universal three-phase DC-DC/AC without neutral point may have external relays/circuit breakers or internal relays/circuit breakers that commutate DC or AC gird/load.

But due to the presence of internal *SSR₁* and *SSR₂,* the universal three-phase DC-DC/AC converter with neutral wire can be directly connected to the single-phase AC grid or load or two-wire DC grid or load.

Both the universal single-phase and the three-phase DC-DC/AC converters are capable to work in DC and AC grids, DC and AC electric drives, islanding mode as a DC or AC power supply. In addition, it can be used as on board electric vehicle charges that can be connected to DC or AC grid.

### Brief description of the drawings

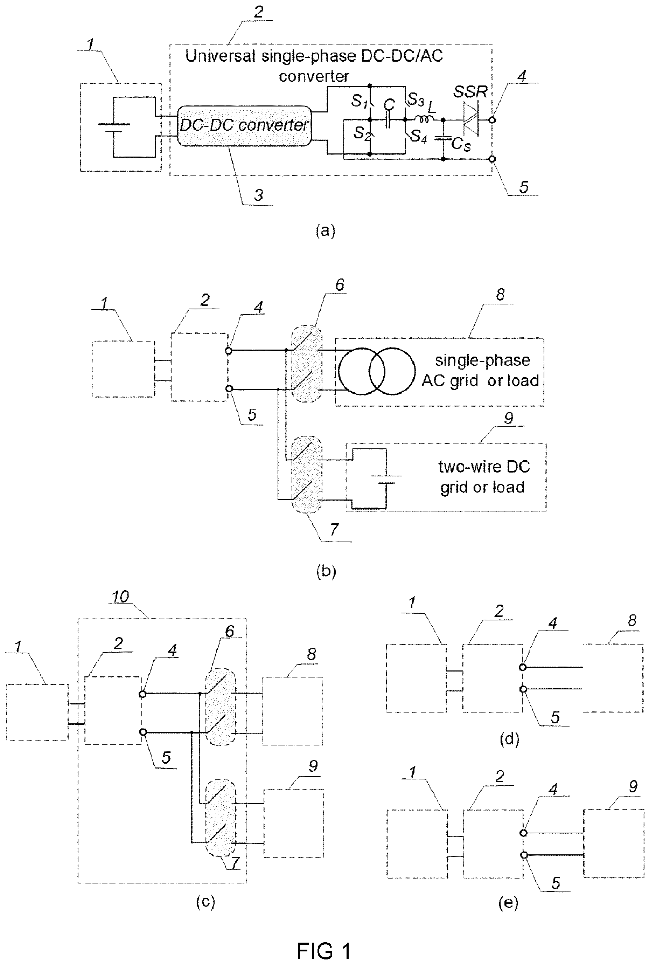

The present invention will be described in more detail below with reference to the drawings in which
Fig. 1 shows the possible the single-phase universal DC-DC/AC converter structures, that can provide DC or single-phase AC output without changing internal structure; where
   (a) shows a power electronic converter structure, which can provide DC or single-phase AC output without changing internal structure;
   (b) shows the connection to the single-phase AC grid or load and two-wire DC grid or load through the single-phase AC relay/circuit breaker and DC relay/circuit breaker to output terminals;
   (c) shows similar solution where single-phase AC relay/circuit breaker and DC relay/circuit breaker are internal components of the universal single-phase DC-DC/AC converter with DC and AC output terminals;
   (d) shows direct connection of the universal single-phase DC-DC/AC converter to the single-phase AC grid and load through the output terminals;
   (e) shows direct connection of the universal single-phase DC-DC/AC converter to the two-wire DC grid or load through the output terminals;

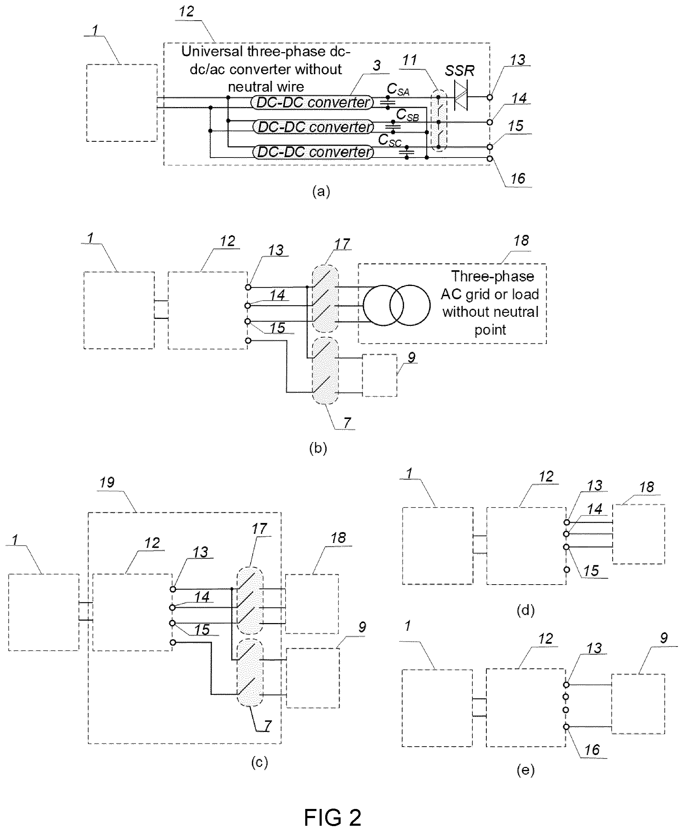

Fig. 2 shows three-phase universal DC-DC/AC solutions that can provide DC output or three-wire three-phase AC output. It consists by three different independent DC-DC converters with common input and split outputs; where
   (a) shows the universal three-phase DC-DC/AC converter without neutral wire, which can provide DC output or three-wire three-phase output; (b) shows the three-phase AC grid or load without neutral wire in case of three-phase AC operation;
   (c) shows solution where three-phase three-wire AC relay/circuit breaker and DC relay/circuit breaker are internal components of the universal three-phase DC-DC/AC converter without neutral wire with DC and AC output terminals;
   (d) shows direct connection of the universal three-phase DC-DC/AC converter without neutral wire to the three-phase AC grid or load through the output terminals;
   (e) shows direct connection of the universal three-phase DC-DC/AC converter without neutral wire to two-wire DC grid or load through the output terminals.

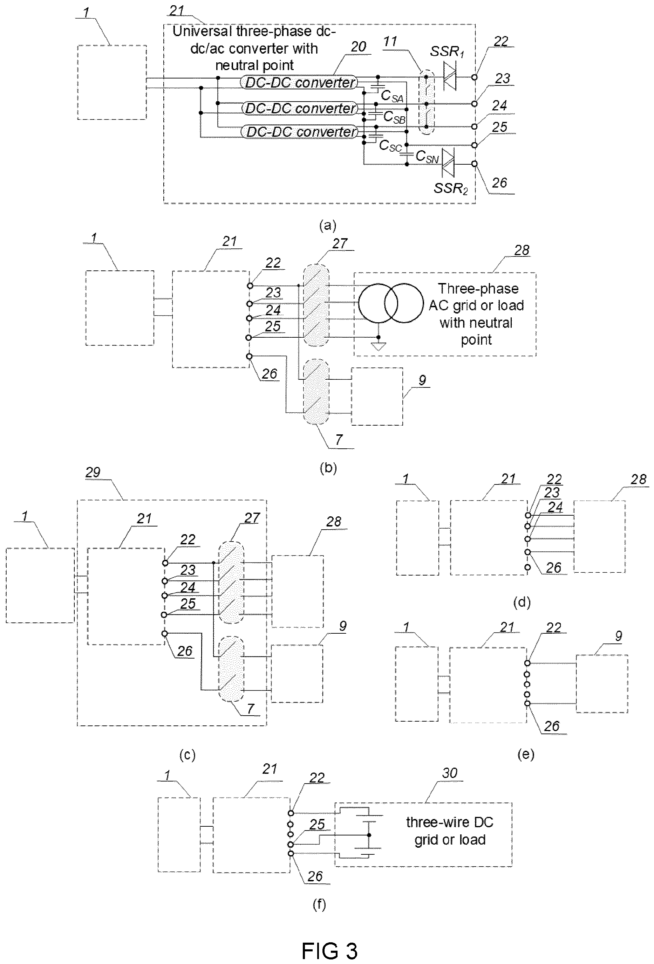

Fig. 3 shows universal DC-DC/AC solutions that can provide DC output with two or three wires or four-wire three-phase output with neutral point; where
   (a) shows a three-phase converter, which can provide DC output or four-wire three-phase output with neutral point;
   (b) shows the three-phase AC grid or load with neutral wire connection to the output terminals through three-phase four-wire AC relay/circuit breaker;
   (c) shows the universal three-phase DC-DC/AC without neutral point having external relays/circuit breakers or internal relays/circuit breakers;
   (d) shows the universal three-phase DC-DC/AC converter with neutral wire direct connection to the single-phase AC grid or load;
   (e) shows the universal three-phase DC-DC/AC converter with neutral wire direct connection to two-wire DC grid or load.
   (f) shows how the universal three-phase DC-DC/AC with neutral point provides energy flow from the input voltage source to the three-wire DC grid or load by means of terminals.

### Detailed description of the embodiments

The universal single-phase DC-DC/AC converter according to present invention is capable to work with single-phase AC or DC output voltage/current by means of changing of control strategy. Fig. 1a shows a power electronic converter structure, which can provide DC or single-phase AC output without changing internal structure. Fig. 1a shows the structure of the universal single-phase DC-DC/AC converter 2. As any DC-DC or DC-AC converter it requires input voltage source 1 and has two output terminals 4 and 5.

An universal single-phase DC-DC/AC converter 2, capable to work with single-phase AC or DC output voltage/current by means of changing of control strategy comprising an input DC voltage source 1 connected to a universal single-phase DC-DC/AC converter 2 comprising a DC-DC converter 3 and an additional switchers *S₁*-*S₄*, an inductor *L,* a capacitor *C,* internal solid-state relay *SSR* and a suppression capacitor *C_{S}* and two output terminals 4 and 5, whereas a single-phase AC relay/circuit breaker 6 and DC relay/circuit breaker 7 are connected to output terminals 4 and 5. The universal converter internal structure is illustrated in Fig. 1a, while Fig. 1b shows the connection to the single-phase AC grid or load 8 and two-wire DC grid or load 9 through the single-phase AC relay/circuit breaker 6 and DC relay/circuit breaker 7 to output terminals 4 and 5.

Fig. 1c shows similar solution where single-phase AC relay/circuit breaker 6 and DC relay/circuit breaker 7 are internal components of the universal single-phase DC-DC/AC converter with DC and AC output terminals 10. In this case, both the DC and AC terminals are available for customers and can be connected to correspondent DC or AC grid or load. At the same time, the universal single-phase DC-DC/AC converter 2 or universal single-phase DC-DC/AC converter with DC and AC output terminals 10 can provide power only to the AC output or DC output simultaneously.

Due to the presence of internal *SSR,* the universal single-phase DC-DC/AC converter 2 can be directly connected to the single-phase AC grid or load 8 (Fig. 1d) and two-wire DC grid or load 9 (Fig. 1e) through the output terminals 4 and 5.

The operation principle of the universal single-phase DC-DC/AC converter 2 does not depend on the presence of single-phase AC relay/circuit breaker 6 and DC relay/circuit breaker 7. These relays/circuit breakers can be mechanical or solid-state.

If the converter is connected to the single-phase AC grid or load 8, any conventional DC-DC converter provides sinusoidal modulation with constant component, while switchers *S₁*-*S₄* are working in unfolding mode with low frequency modulation which in turns provides pure sinusoidal output voltage shape.

In case of connection to the two-wire DC grid or load 9, the conventional DC-DC converter provides only constant DC voltage, while switchers *S₂*, *S₃* are closed and provide positive polarity. In case of negative polarity switches *S₁*, *S₄* are closed while *S₂*, *S₃* are opened.

The control system of DC-DC converter in this case works in the same way with the only difference that consists in the constant reference voltage level.

The measurement system estimates the type of the output voltage and change control algorithm.

The switching between output AC and DC operation is achieving by changing of control strategy of DC-DC converter along with state of external switchers S₁-S₄.

Internal suppression capacitor *C_{S}* and solid-state relay *SSR* are required in order to provide smooth connection/disconnection to the DC grid or load. At the same time, *SSR* acts as conventional circuit breaker for AC mode.

Fig. 2 shows the universal three-phase DC-DC/AC converter without neutral point 12 and universal three-phase DC-DC/AC converter without neutral wire with DC and AC output terminals 19 that can provide DC output or three-wire three-phase output. Fig. 2a shows the universal three-phase DC-DC/AC converter without neutral wire 12, which can provide DC output or three-wire three-phase output. It consists by three different independent DC-DC converters 3, mechanical/solid-state relay 8, suppression capacitors *C_{SA}, C_{SB}, C_{SC}* and solid-state relay *SSR* and four output terminals 13, 14, 15, 16.

In case of three-phase AC operation, the three-phase AC grid or load without neutral wire 18 is connected to the terminals 13, 14, 15 through the external three-phase three-wire AC relay/circuit breaker 17 (Fig. 2b). Each of internal DC-DC converters 3 provides the sinusoidal output voltage with constant component by means of conventional control approach while relay 11 is open. In fact, each of DC-DC converters provides only positive output voltage, but due to the three-wire connection of the three-phase system, it provides three-phase linear voltage without constant component by means of subtraction of DC component.

In this case of DC operation, the terminals 13, 14 and 15 are connected in one point by means of closed relay 11. It provides their parallel connection. Each of the DC-DC converters provides DC output voltage. The power flow from input DC source 1 is shared between connected in parallel DC-DC converters 3. The two-wire DC grid or load 9 is connected to the 13 and 16 output terminals of the universal three-phase DC-DC/AC converter without neutral wire 12. The measurement system estimates the type of the output voltage and change control configuration of relay 11 and control algorithm. Both control algorithms for DC and AC output are conventional, but the invention consists in the circuit reconfiguration and additional components. Similar to single-phase solution, suppression capacitors *C_{SA}*, *C_{SB}, C_{SC}* and solid-state relay *SSR* are required in order to provide smooth connection/disconnection to the DC grid or load. At the same time, SSR may act as conventional circuit breaker for AC mode.

Similar to single-phase solution, the universal three-phase DC-DC/AC without neutral point may have external relays/circuit breakers (Fig. 2b) or internal relays/circuit breakers (Fig. 2c) that commutate DC or AC gird/load. Fig. 2c shows similar solution where three-phase three-wire AC relay/circuit breaker 17 and DC relay/circuit breaker 7 are internal components of the universal three-phase DC-DC/AC converter without neutral wire with DC and AC output terminals 19. In this case, both the DC and AC terminals are available for customers and can be connected to correspondent DC or AC grid or load. At the same time, the universal three-phase DC-DC/AC converter without neutral wire 12 or universal three-phase DC-DC/AC converter without neutral wire with DC and AC output terminals 19 can provide power only to the AC output or DC output simultaneously.

At the same time, the three-phase three-wire AC relay/circuit breaker 17 and DC relay/circuit breaker 7 are required for mechanical disconnection converter from the grid or load and are not strictly required. Due to the presence of internal *SSR,* the universal three-phase DC-DC/AC converter without neutral wire 12 can be directly connected to the three-phase AC grid or load 18 (Fig. 2d) through the output terminals 13, 14 and 15 or two-wire DC grid or load 9 (Fig. 2e) through the output terminals 13 and 16.

Alternatively the present invention proposes a three-phase converter, which can provide DC output or four-wire three-phase output with neutral point (Fig. 3a). It consists by three different independent DC-DC converters with middle point 20 with common input and split outputs, mechanical/solid-state relay 11, suppression capacitors *C_{SA}, C_{SB}, C_{SC}, C_{SN}* and two solid-state relays *SSR₁* and *SSR₂* and five output terminals 22, 23, 24, 25, 26.

The idea is similar to the previous solution but due to the DC-DC converters with middle point 15, the neutral point in three-phase system is realized. It allows to realize three-phase four-wire AC output configuration. Fig. 3b shows that three-phase AC grid or load with neutral wire 28 can be connected to the output terminals 22, 23, 24, 25 through three-phase four-wire AC relay/circuit breaker 27. Each of internal DC-DC converters with middle point 20 provides the sinusoidal output voltage with constant component while relay 11 is open.

Similar to above described, the universal three-phase DC-DC/AC without neutral point may have external relays/circuit breakers (Fig. 3b) or internal relays/circuit breakers (Fig. 3c) that commutate DC or AC gird/load. Fig. 3c shows similar solution where three-phase four-wire AC relay/circuit breaker 27 and DC relay/circuit breaker 7 are internal components of the universal three-phase DC-DC/AC converter 29 with neutral wire with DC and AC output terminals.

But due to the presence of internal *SSR₁* and *SSR₂,* the universal three-phase DC-DC/AC converter with neutral wire 21 can be directly connected to the single-phase AC grid or load 8 (Fig. 3d) or two-wire DC grid or load 9 (Fig. 3e).

Finally, Fig. 3f shows how the universal three-phase DC-DC/AC with neutral point 21 provides energy flow from the input voltage source 1 to the three-wire DC grid or load 30 by means of terminals 22, 25 and 26, relay 11 is closed. Two solid-state relays provide independent control of both positive and negative wires of the three-wire DC grid or load 30.

In case of grid-connected system, the measurement system estimates the type of the output voltage and change control algorithm. It comprises any conventional DC-DC converter 3, switchers *S₁*-*S₄*, an inductor *L,* a capacitor C, suppression capacitor *C_{S}* and solid-state relay *SSR.*

The switching between output AC and DC operation is achieving by changing of control strategy of DC-DC converter along with state of external switchers *S₁*-*S₄*. In case of AC operation switchers *S₁*-*S₄* are working in unfolding mode with low frequency modulation. In case of DC output switchers *S₂*, *S₃* are closed and provide positive polarity. In case of negative polarity switches *S₁*, *S₄* are closed.

The positive DC output voltage of the universal single-phase DC-DC/AC converter 2 is achieved by closed switches *S₂*, *S₃* and the negative DC output voltage of the new universal single-phase DC-DC/AC converter is achieved by closed switches *S₁*, *S₄*.

In case of universal three-phase DC-DC/AC converters (Fig. 2a and Fig. 3a) the universal operation is achieved by changing of the control system of internal DC-DC converters 3 or 15 and state of the mechanical/solid-state relay 8. Suppression capacitors and solid-state relays *SSR* are used for smooth connection/disconnection to the DC grid or load.

In an islanding operation mode, this converter will provide DC or AC output voltage according to an external command. Grid-forming operation can be realized by means of control system without any changing of the internal structure.

The main embodiments of all solutions consist in the different variety of internal DC-DC converters. It can be voltage source or current source converters, isolated or non-isolated. It in turns provides different input and output voltage range and scope of application. Also, the variety of embodiments is defined by presence of AC relay/circuit breakers 6, 17, 27 and DC relay/circuit breakers 7. They can be integrated inside converter providing different DC and AC outputs (Fig. 1c, Fig. 2c, Fig. 3c), they can be used as external components of converter (Fig. 1b, Fig. 2b, Fig. 3b) or they can be omitted (Fig. 1d, Fig. 1e, Fig. 2d, Fig. 2e, Fig. 3d, Fig. 3e, Fig. 3f).

### List of components

1 - input DC voltage source;
2 - universal single-phase DC-DC/AC converter;
3 - DC-DC converter;
4 - first terminal of universal single-phase DC-DC/AC converter;
5 - second terminal of universal single-phase DC-DC/AC converter;
6 - single-phase AC relay/circuit breaker;
7 - DC relay/circuit breaker;
8 - single-phase AC grid or load;
9 - two-wire DC grid or load;
10 - universal single-phase DC-DC/AC converter with DC and AC output terminals;
11 - mechanical relay/solid state relay;
12 - universal three-phase DC-DC/AC converter without neutral wire;
13-16 - terminals of universal three-phase DC-DC/AC converter without neutral wire:
   13 - first terminal of universal three-phase DC-DC/AC converter without neutral wire;
   14 - second terminal of universal three-phase DC-DC/AC converter without neutral wire;
   15 - third terminal of universal three-phase DC-DC/AC converter without neutral wire;
   16 - fourth terminal of universal three-phase DC-DC/AC converter without neutral wire;
17 - three-phase three-wire AC relay/circuit breaker;
18 -three-phase AC grid or load without neutral wire;
19 - universal three-phase DC-DC/AC converter without neutral wire with DC and AC output terminals;
20 - DC-DC converter with middle point;
21 - universal three-phase DC-DC/AC converter with neutral wire;
22-26 - terminals of universal three-phase DC-DC/AC converter with neutral wire:
   22 - first terminal of universal three-phase DC-DC/AC converter with neutral wire;
   23 - second terminal of universal three-phase DC-DC/AC converter with neutral wire;
   24 - third terminal of universal three-phase DC-DC/AC converter with neutral wire;
   25 - fourth terminal of universal three-phase DC-DC/AC converter with neutral wire;
   26 -fifth terminal of universal three-phase DC-DC/AC converter with neutral wire;
27 - three-phase four-wire AC relay/circuit breaker;
28 - three-phase AC grid or load with neutral wire;
29 - universal three-phase DC-DC/AC converter with neutral wire with DC and AC output terminals;
30 - three-wire DC grid or load.

## Claims

1. An universal single-phase DC-DC/AC converter capable to work with single-phase AC or DC output voltage/current by means of changing of control strategy **comprising** an input DC voltage source (1) connected to a universal single-phase DC-DC/AC converter (2) comprising a DC-DC converter (3) and an additional switchers *S₁*-*S4*, an inductor *L,* a capacitor *C,* internal solid-state relay SSR and a suppression capacitor *C_{S}* and two output terminals (4) and (5), whereas a single-phase AC relay/circuit breaker (6) and DC relay/circuit breaker (7) are connected to output terminals (4) and (5).

2. The universal single-phase DC-DC/AC converter according to claim 1, wherein a positive DC output voltage between terminals (4) and (5) of the universal single-phase DC-DC/AC converter is achieved by closed switches *S₂*, *S₃* and a negative DC output voltage between terminals (4) and (5) of the universal single-phase DC-DC/AC converter is achieved by closed switches *S₁*, *S₄*.

3. The universal single-phase DC-DC/AC converter according to claims 1 and 2, wherein said converter has DC and AC output terminals capable to work with single-phase AC grid or load (8) or two-wire DC grid or load (9) by means of changing of control strategy comprising the input DC voltage source (1) connected to a universal single-phase DC-DC/AC converter with DC and AC output terminals (10) comprising the DC-DC converter (3), the external switchers *S₁*-*S₄*, inductor *L,* capacitor *C,* internal solid-state relay *SSR* and a suppression capacitor *C_{S}* and two output terminals (4) and (5), internal single-phase AC relay/circuit breaker (6) and DC relay/circuit breaker (7) that are connected correspondingly to output terminals (4) and (5).

4. The universal single-phase DC-DC/AC converter according to claim 1, 2 or 3 wherein said converter is able to work in DC and AC grids, DC and AC electric drives, islanding mode as a DC or AC power supply.

5. The universal single-phase DC-DC/AC converter according to claim 3 comprising single-phase AC relay/circuit breaker (4) and DC relay/circuit breaker (5) capable to provide energy flow from the input DC voltage source (1) only to the single-phase AC grid or load (8) or only to two-wire DC grid or load (9).

6. An universal three-phase DC-DC/AC converter without neutral point connected to the input DC voltage source (1) **comprising** a DC-DC converters (3), an internal mechanical or solid-state relay (11), an additional solid-state relay *SSR* and a suppression capacitors *C_{SA}, C_{SB}, C_{SC}* and four output terminals (13), (14), (15) and (16), wherein said universal three-phase DC-DC/AC converter is capable to work with three-phase AC grid or load without neutral wire (18) or two-wire DC grid or load (9) by means of changing of control strategy and state of mechanical relay/solid state relay (11).

7. The universal three-phase DC-DC/AC converter according to claim 6, wherein AC output voltage between output terminals (13), (14) and (15) is achieved by opened relay/solid state relay (11) and modulation strategy of the internal DC-DC converter (3) which contains DC and AC voltage components.

8. The universal three-phase DC-DC/AC converter according to claim 6, wherein DC output voltage between output terminals (13) and (16) of the universal three-phase DC-DC/AC converter without neutral point is achieved by closed mechanical relay/solid state relay (11) and modulation strategy of the internal DC-DC converter (3) which contains only DC voltage component.

9. The universal three-phase DC-DC/AC converter according to claims 6 to 8, wherein said converter is able to work in DC and AC grids, DC and AC electric drives, islanding mode as a DC or AC power supply.

10. The universal three-phase DC-DC/AC converter with a neutral point (21) according to any of preceding claims **comprising** a DC-DC converter with middle point (20), an internal mechanical or solid-state relay (11), an additional solid-state relays *SSR₁, SSR₂* and a suppression capacitors *C_{SA}, C_{SB}, C_{SC}, C_{SN}* and five output terminals (22), (23), (24), (25) and (26) capable to provide energy flow from the input DC voltage source (1) only to the three-phase AC grid or load with neutral wire (28) by means of connection to the four output terminals (22), (23), (24), (25) to the closed external three-phase four-wire AC relay/circuit breaker (27), open internal mechanical or solid-state relay (11) or only to two-wire DC grid or load (9) by means of connection to the output terminals (22) and (26) to the closed external DC relay/circuit breaker (7) and closed internal mechanical or solid-state relay (11).

11. An universal three-phase DC-DC/AC converter with neutral point comprising universal single-phase DC-DC/AC converters according to any of claim 1 to 5, where said universal three-phase DC-DC/AC converter is capable to work with three-phase AC grid or load with neutral wire (28) or two-wire DC grid or load (9) by means of changing of control strategy and state of mechanical relay/solid state relay (11).

12. The universal three-phase DC-DC/AC converter with neutral point according to claim 11, where AC output voltage between output terminals (22), (23), (24) and (25) of the universal three-phase DC-DC/AC converter with neutral wire (21) is achieved by opened mechanical relay/solid state relay (11) and modulation strategy of the DC-DC converter with middle point (20) which contains DC and AC voltage components, where neutral voltage has a potential of DC voltage component.

13. The universal three-phase DC-DC/AC converter with neutral point (21) according to claim 11, where DC output voltage between output terminals (22) and (26) of the universal three-phase DC-DC/AC converter without neutral point is achieved by closed mechanical relay/solid state relay (11) and modulation strategy of the internal DC-DC converter with middle point (20) which contains only DC component and neutral point is not connected.

14. The universal three-phase DC-DC/AC converter with neutral point according to claims 11 to 13, where said converter is able to work in DC and AC grids, DC and AC electric drives, islanding mode as a DC or AC power supply.

15. The universal three-phase DC-DC/AC converter with neutral point (21) comprising three-phase four-wire AC relay/circuit breaker (27) and DC relay/circuit breaker (7) capable to provide energy flow from the input DC voltage source (1) only to the three-phase AC grid or load with neutral point (28) or only to two-wire DC grid or load (9).

16. The smooth connection/disconnection of the universal single-phase DC-DC/AC converter of claim 1 to the two-wire DC grid or load (9) is achieved by internal inductor *L,* suppression capacitor *C_{S}* and internal solid-state relay *SSR.*
